# EUROPÄISCHE PATENTSCHRIFT

(11) **EP 2 755 862 B1**
(45) Veröffentlichungstag und Bekanntmachung des Hinweises auf die Patenterteilung: **13.04.2016**
(21) Anmeldenummer: 11788881.8
(22) Anmeldetag: 01.12.2011
(51) Int. Cl.: B60R 5/02, B29C 70/44, B60B 21/00

(54) **FAHRZEUG-RAD MIT EINER FELGE AUS FASERVERSTÄRKTEM KUNSTSTOFFMATERIAL**
VEHICLE WHEEL WITH A RIM MADE OF FIBRE-REINFORCED SYNTHETIC MATERIAL
ROUE DE VÉHICULE POURVUE D'UNE JANTE EN MATIÈRE PLASTIQUE RENFORCÉE PAR DES FIBRES

(30) Priorität: 14.09.2011 DE 102011082689
(43) Veröffentlichungstag der Anmeldung: 23.07.2014
(73) Patentinhaber: Bayerische Motoren Werke Aktiengesellschaft, 80809 München (DE); BBS Motorsport GmbH, 77716 Haslach im Kinzigtal (DE); Kringlan Composites AG, 8112 Otelfingen (CH)
(72) Erfinder: BURLEFINGER, Hubert, 84095 Furth (DE); TOMASINI, Markus, 85640 Putzbrunn (DE); PINI, Niccolo, CH-8046 Zürich (CH); MUELLER, Roman, 77761 Schiltach (DE)
(86) Internationale Anmeldenummer: PCT/EP2011/071552
(87) Internationale Veröffentlichungsnummer: WO 2013/037428

(56) Entgegenhaltungen:
- EP-A1- 1 506 882
- EP-A1- 1 985 435
- DE-A1- 3 006 227
- US-A1- 2004 227 393
- US-A1- 2007 194 619

## Beschreibung

Die Erfindung betrifft ein Fahrzeug-Rad mit einer Felge oder eine Felge eines Fahrzeug-Rades, die aus faserverstärktem Kunststoffmaterial in Form mehrerer Lagen von faserverstärktem Kunststoff-Halbzeug besteht, welche in einer Pressvorrichtung unter Wärmezufuhr zum fertigen Bauteil geformt werden, wobei die Felge wie üblich aus einem Felgenbett besteht, zu dessen beiden Seiten sich eine Felgen-Schulter anschließt, die in ein Felgen-Horn übergeht. Zum technischen Umfeld wird insbesondere auf die EP 1 985 435 A1 verwiesen; weiterhin seien als Stand der Technik die EP 1 506 882 A1, US 2007/194619 A1 und US 2004/227393 A1 genannt. Dabei sei ausdrücklich darauf hingewiesen, dass der Begriff des faserverstärkten Kunststoff-Halbzeugs äußerst allgemein als ein flexibler und über einer gewisse Fläche zusammenhängender vorrangig flächiger und relativ dünner Material-Verbund zu verstehen ist, der beispielsweise in Form eines breiten Bandes oder eines sonstigen flächigen Stücks von Material ausgebildet sein kann.

Die Verwendung von faserverstärktem, insbesondere kohlefaserverstärktem Kunststoff-Material für das Rad oder zumindest die Rad-Felge eines Fahrzeugs, insbesondere eines Kraftfahrzeugs, ermöglicht ein besonders geringes Bauteil-Gewicht, wodurch die sog. ungefederte Masse gering gehalten werden kann, was bekanntlich sehr vorteilhaft ist. Problematisch kann jedoch die Erreichung der geforderten Bauteil-Steifigkeit sein.

Für eine Fahrradfelge ist diesbezüglich aus der eingangs erstgenannten Schrift ein Herstellverfahren bekannt, wonach eine erste Anzahl von Streifen eines ein Fasergewebe umfassenden Materials auf eine separate Unterlage aufgelegt wird und eine zweiten Anzahl von Streifen dieses Materials aufgelegt wird, wobei die zweite Anzahl von Streifen eine andere Form als die erste Anzahl aufweist, woraus dann ein erstes mehrschichtiges Laminatband gebildet und zu einem V-förmigen Laminatband geformt wird, welches in ein Werkzeug eingelegt wird, worauf ein Kern aufgelegt wird. Auf letzteren wird dann ein zweites Laminatband aufgelegt und darauf ringförmige Felgenbettringe, woraufhin mittels eines Spreizringes ein Verpressen der oberen Felgenflanken und Felgenhörner erfolgt. Nach Aufbringen eines Außenringes wird das Aushärten im Werkzeug durchgeführt.

Auch die weiteren Schriften zeigen ähnliche Herstellverfahren für Fahrradfelgen mittels mehrerer Lagen von faserverstärktem Kunststoff-Halbzeug.

Vorliegend soll nun für eine Felge eines Fahrzeug-Rades nach dem Oberbegriff des Anspruchs 1, bei welchem Fahrzeug es sich beispielsweise um einen Personenkraftwagen handeln kann, eine günstige Maßnahme aufgezeigt werden, mithilfe derer eine gute Bauteil-Steifigkeit erreicht werden kann (= Aufgabe der vorliegenden Erfindung).

Die Lösung dieser Aufgabe ist dadurch gekennzeichnet, dass das Felgenbett durch mehrere Lagen eines sich bis zum Felgen-Horn erstreckenden Grund-Laminats gebildet ist, zwischen welche im Bereich der Felgen-Schulter sowie des Felgen-Horns weitere Lagen eingelegt sind. Vorteilhafte Weiterbildungen sind Inhalt der Unteransprüche. Dabei sei darauf hingewiesen, dass mit den vorliegenden Ansprüchen ein Gegenstand beansprucht ist (d.h. vorliegend sind Vorrichtungsansprüche formuliert), dass jedoch zumindest ein abhängiger Anspruch oder weitere erfinderische Merkmale auch als Verfahrensansprüche (d.h. als Herstell-Verfahren) formuliert werden könnten.

Erfindungsgemäß ist die aus mehreren Lagen von faserverstärktem Kunststoff-Halbzeug aufgebaute Felge in demjenigen Bereich, welcher der höchsten Belastung ausgesetzt ist, dicker, d.h. durch eine größere Anzahl von beim Herstellen der Felge aufeinander gelegten Lagen von Halbzeug geformt als im Bereich des sog. Felgenbetts, das durch ein sich bis zu den beiden Felgen-Hörnern erstreckendes sog. Grund-Laminat, welches ebenfalls mehrere Lagen von faserverstärkten Kunststoff-Halbzeug enthält, gebildet ist. Dabei sind die Begriffe Felgenbett, Felgen-Schulter und Felgen-Horn der allgemein üblichen Nomenklatur entsprechend verwendet und können auch anhand der beigefügten Prinzipskizze interpretiert werden.

Es ist allgemein bekannt und üblich, dass bei der Herstellung faserverstärkter Kunststoff-Bauteile mehrere Lagen von faserverstärkten Kunststoff-Halbzeug jeweils mit unterschiedlicher Faser-Ausrichtung aufeinander gelegt werden, d.h. in einer ersten Lage sind die darin enthaltenen VerstärkungsFasern (bspw. Carbon-Fasern) beispielsweise vorrangig in Längsrichtung orientiert, in einer darauf liegenden zweiten Lage vorzugsweise senkrecht hierzu in Querrichtung und in einer weiteren darauf liegenden dritten Lage beispielsweise unter einem Winkel von +/- 45° gegenüber der Längsrichtung und der Querrichtung ausgerichtet. Eine vergleichbare Anordnung empfiehlt sich bei vorliegender Erfindung auch für das sog. Grund-Laminat, in welchem Lagen mit im wesentlichen tangentialer Faser-Ausrichtung und weitere Lagen mit hierzu einen Winkel von +/- 45° oder 90° einschließender Faser-Ausrichtung vorgesehen sein können, wobei als Tangential-Richtung die Umfangsrichtung der Felge verstanden wird. Wenn die Fasern in einem Winkel von 90° hiergegen ausgerichtet sind, so verlaufen diese im wesentlichen parallel zur Drehachse des diese Felge aufweisenden Rades. In diesem Zusammenhang sei darauf hingewiesen, dass diese Winkelangaben nicht zwingend sind sondern einen Winkel-Bereich angeben sollen und insbesondere anstelle der um 45° in der einen oder anderen Richtung ("+/-" ) gegenüber der Tangential-Richtung geneigten Faser-Ausrichtung auch eine solche von bspw. +/- 60° gewählt werden kann.

Vorliegend hat sich nun gezeigt, dass es zur Steigerung der Bauteil-Steifigkeit unter gleichzeitiger Gewährleistung einer geringen Elastizität im Hinblick auf eine kurzzeitige Stoßbelastung besonders vorteilhaft ist, wenn die im Bereich der Felgen-Schulter und des Felgen-Horns zwischen den Lagen des Grund-Laminats vorgesehenen weiteren Lagen von faserverstärkten Kunststoff-Halbzeug eine im wesentlichen tangentiale Faserausrichtung aufweisen. Was hingegen das Grundlaminat betrifft, so können diejenigen Lagen mit einer gegenüber der Tangentialrichtung winkeligen Faserausrichtung durch in einem Thermoformprozess vorgeformte Bogensegmente gebildet sein, die beim Legen der einzelnen Lagen für die Pressvorrichtung auf ein sog. Preform-Werkzeug, welches quasi Bestandteil der Pressvorrichtung ist, mit aufgelegt werden. Auf diesem Preform-Werkzeug werden dann die Lagen vorzugsweise durch Ultraschall-Schweißpunkte fixiert, wobei dieses sog. Schweiß-Heften vorzugsweise in einem einzigen Schweißvorgang durch mehrere Lagen hindurch erfolgt.

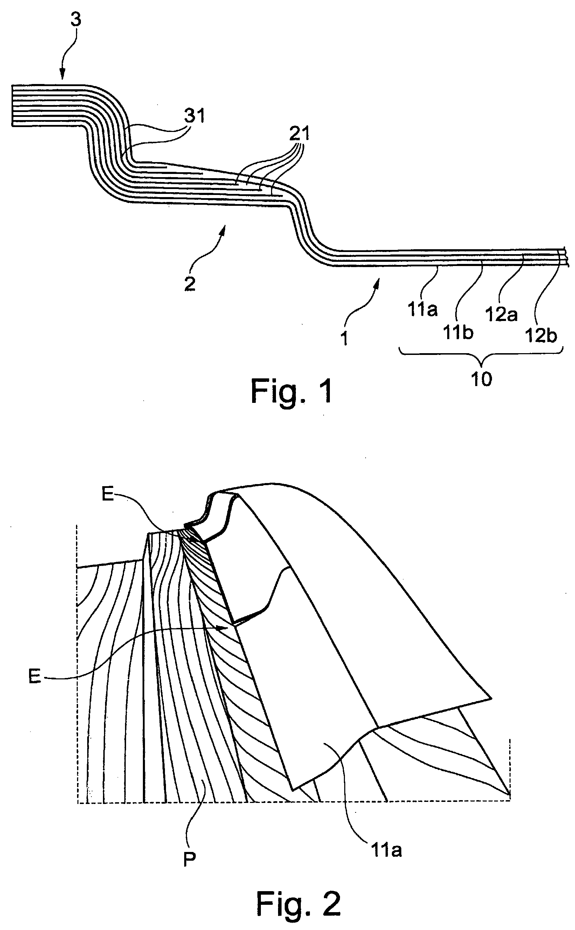

Die beigefügte Figur 1 zeigt in Form einer Prinzipskizze einen Querschnitt durch eine erfindungsgemäße Rad-Felge und dabei einen Teil des FelgenBetts mit Felgen-Schulter und Felgen-Horn, während in Figur 2 eine perspektivische Teil-Ansicht eines Preform-Werkzeugs für eine solche Felge mit einer ersten auf diesesPreform-Werkzeug aufgelegten Lage eines faserverstärkten Kunststoff-Halbzeugs mit tangential ausgerichteten Fasern zeigt.

Zunächst auf **Fig.1** Bezug nehmend ist mit der Bezugsziffer 1 das sog. Felgen-Bett einer nicht weiter dargestellten Felge eines Rades eines Personenkraftwagens gekennzeichnet, an welches sich in Axialrichtung des Rades betrachtet nach außen hin eine sog. Felgen-Schulter 2 anschließt, auf welcher der nicht dargestellte, auf die Felge aufgezogene Luftreifen mit seinem Wulst aufliegt, welcher seitlich am sich an die Felgen-Schulter 2 anschließenden Felgen-Horn 3 anliegt.

Das Felgen-Bett 1 ist durch ein mehrlagiges sog. Grund-Laminat 10 gebildet, wobei hier der Einfachheit nur vier Lagen von faserverstärkten KunststoffHalbzeugen dargestellt sind, nämlich zwei in der Schnitt-Darstellung untere Lagen 11a und 11 b und zwei darauf liegende obere Lagen 12a und 12b. (Tatsächlich sind mehr als diese vier Lagen vorgesehen). Beim Herstell-Prozess wird zunächst die untere Lage 11a auf ein Preform-Werkzeug aufgebracht (vgl. vorab das in Fig.2 anteilig sichtbare mit dem Buchstaben P gekennzeichnete Preform-Werkzeug), wobei die Fasern in dieser untersten Lage 11a im Wesentlichen tangential, d.h. in Umfangsrichtung der Felge ausgerichtet sind. Auf diese unterste Lage 11a wird die weitere untere Lage 11 b aufgebracht, in der die Fasern beispielsweise in Axialrichtung des Rades, d.h. senkrecht zur Felgen-Umfangsrichtung ausgerichtet sind.

Ehe die hier beiden oberen Lagen 12a und 12b aufgebracht werden, werden nur im Bereich der Felgen-Schulter 2 und des Felgen-Horns 3 aufeinander gelegt mehrere Lagen 21 von faserverstärktem Kunststoff-Halbzeug auf das Preform-Werkzeug (P) bzw. genauer auf die darauf bereits befindlichen Lagen aufgebracht, in welchen die Fasern im wesentlichen tangential ausgerichtet sind. Im nächsten Verfahrensschritt des Herstell-Prozesses wird zumindest eine der oberen Lagen des Grund-Laminats 10 aufgebracht, vorliegend die Lage 12a, und zwar sowohl im Bereich des Felgen-Horns 3 als auch im Bereich der Felgen-Schulter 2 als auch im Bereich des FelgenBetts 1. Anschließend werden insbesondere im Bereich des Felgen-Horns 3 mehrere Lagen 31 von faserverstärktem Kunststoff-Halbzeug aufgebracht, in welchen die Fasern wieder im wesentlichen tangential ausgerichtet sind, wonach quasi abschließend die oberste(n) Lage(n) 12b des Grund-Laminats 10 aufgebracht wird bzw. werden. Dabei ist dadurch, dass die Lagen 21 und 31 vom Felgen-Horn 3 aus betrachtet quasi abgestuft abnehmend die Felgen-Schulter 2 nur anteilig vollständig überdecken, eine wie ersichtlich leicht konische Formgebung der Felgen-Schulter 2 (mit zur Felgen-Mittenebene abnehmendem Durchmesser) möglich. Hingegen besitzt das Felgen-Bett 1 idealerweise eine kreiszylindrische Form, damit die Lagen des Grund-Laminats 10 dort ohne Verschränkung einfach auf das Preform-Werkzeug (P) gelegt werden können.

**Figur 2** zeigt, wie die unterste Lage 11a mit der im Wesentlichen tangentialen Faser-Ausrichtung im Übergangsbereich vom Felgen-Horn 3 zur Felgen-Schulter 2 auf ein Preform-Werkzeug P aufgelegt werden kann, mit welchem dann sämtliche aufgelegten Lagen (11a, 11b, 21, 12a, 31, 12b) in einer Pressvorrichtung unter Wärmezufuhr zum fertigen Bauteil, nämlich zu einer erfindungsgemäßen Felge geformt werden können. Demnach kann die Lage 11a in Umfangsrichtung der Felge betrachtet aus einem einzigen Kunststoff-Halbzeug oder zusammenhängenden Material-Verbund in Form eines eine gewisse Breite aufweisenden Bandes oder aus mehreren hintereinander angeordneten Band-Abschnitten oder dgl. als Kunststoff-Halbzeuge bestehen. In Axialrichtung des Rades betrachtet können ebenfalls mehrere Kunststoff-Halbzeuge in Form von Bändern oder dgl. nebeneinander angeordnet bzw. auf das Preform-Werkzeug P gewickelt sein oder werden, um eine Lage 11a etc. darzustellen. Vorzugsweise wird dabei wie dargestellt die Lage 11a im Übergangsbereich vom Felgen-Horn 3 zur Felgen-Schulter 2 als vorkonsolidiertes L-Profil gewickelt, dessen abgewinkelte Seite in regelmäßigen Abständen eingeschnitten wird (Einschnitte E), um die Krümmung in Umfangsrichtung der Felge auszugleichen. Eine auf dieser Lage 11a aufgebrachte in Fig.2 nicht dargestellte Lage 11 b, in der die Fasern überwiegend in Axialrichtung des Rades oder unter einem Winkel von 45° zur genannten Tangential-Richtung ausgerichtet ist, benötigt keine derartigen Einschnitte und ist vorzugsweise aus mehreren bogenförmigen vorgeformten Segmenten zusammengesetzt, d.h. besteht aus mehreren in Umfangsrichtung der Felge betrachtet hintereinander angeordneten Kunststoff-Halbzeug-Segmenten.

## Patentansprüche

1. Fahrzeug-Rad mit einer Felge oder Felge eines Fahrzeug-Rades, die aus faserverstärktem Kunststoffmaterial in Form mehrerer Lagen (11a, 11b, 12a, 12b, 21, 31) von faserverstärktem Kunststoff-Halbzeug besteht, welche in einer Pressvorrichtung unter Wärmezufuhr zum fertigen Bauteil geformt werden, wobei die Felge wie üblich aus einem Felgen-Bett (1), besteht, zu dessen beiden Seiten sich eine Felgen-Schulter (2) anschließt, die in ein Felgen-Horn (3) übergeht, **dadurch gekennzeichnet, dass** das Felgen-Bett (1) durch mehrere Lagen (11 a, 11 b, 12a, 12b) eines sich bis zum Felgen-Horn (3) erstreckenden Grund-Laminats (10) gebildet ist, zwischen welche im Bereich der Felgen-Schulter (2) sowie des Felgen-Horns (3) weitere Lagen (21, 31) eingelegt sind.

2. Rad-Felge nach Anspruch 1,
**dadurch gekennzeichnet, dass** die weiteren Lagen (21, 31) eine im wesentlichen tangentiale Faserausrichtung aufweisen.

3. Rad-Felge nach Anspruch 1 oder 2,
**dadurch gekennzeichnet, dass** das Grundlaminat (10) Lagen (11a, 12a) mit im wesentlichen tangentialer Faserausrichtung und weitere Lagen (11 b, 12b) mit hierzu einen Winkel in der Größenordnung von 45° oder 90° einschließenden Faserausrichtung enthält, wobei die Lagen (11b, 12b) mit der winkeligen Faserausrichtung durch in einem Thermoformprozess vorgeformte Bogensegmente gebildet sind, die beim Legen der einzelnen Lagen auf ein Preform-Werkzeug der Pressvorrichtung mit aufgelegt werden.

## Claims

1. A vehicle wheel with a rim or rim of a vehicle wheel, which rim comprises fibre-reinforced plastics material in the form of a plurality of layers (11 a, 11 b, 12a, 12b, 21, 31) of a fibre-reinforced semi-finished plastics product which is formed into the finished component in a pressing device with the supply of heat, wherein the rim comprises as usual a rim well (1), adjoining both sides of which is a rim shoulder (2) which merges into a rim flange (3), **characterised in that** the rim well (1) is formed by a plurality of layers (11 a, 11 b, 12a, 12b) of a base laminate (10) extending up to the rim flange (3), between which layers further layers (21, 31) are inserted in the region of the rim shoulder (2) and of the rim flange (3).

2. A wheel or rim according to claim 1, **characterised in that** the further layers (21, 31) have a substantially tangential fibre orientation.

3. A wheel or rim according to claim 1 or claim 2, **characterised in that** the base laminate (10) contains layers (11a, 12a) having a substantially tangential fibre orientation and contains further layers (11b, 12b) having a fibre orientation including an angle of the order of magnitude of 45° or 90° with respect thereto, the layers (11 b, 12b) having the angular fibre orientation being formed by curved segments which are preformed in a thermoforming process and which, when the individual layers are placed on a perform tool of the pressing device, are also placed there.

## Revendications

1. Roue de véhicule comprenant une jante ou jante de roue de véhicule qui est réalisée en un matériau synthétique renforcé par des fibres sous la forme de plusieurs couches (11a, 11b, 12a, 12b, 21, 31) de produits semi-finis en matériau synthétique renforcé par des fibres qui sont mis en forme dans un dispositif de compression avec addition de chaleur pour obtenir un élément fini, la jante étant constituée de manière usuelle, d'une embase de jante (1) aux deux extrémités de laquelle se connecte un épaulement de jante (2) qui se prolonge par un bord de jante (3),
**caractérisée en ce que**
l'embase de jante (1) est formée par plusieurs couches (11a, 11b, 12a, 12b) d'un laminé de base (10) s'étendant jusqu'au bord de jante (3), entre lesquelles sont insérées d'autres couches (21, 31) dans la zone de l'épaulement de jante (2) et du bord de jante (3).

2. Jante de roue conforme à la revendication 1,
**caractérisée en ce que**
les autres couches (21, 31) ont une orientation de fibres essentiellement tangentielle.

3. Jante de roue conforme à la revendication 1 ou 2,
**caractérisée en ce que**
le laminé de base (10) comprend des couches (11a, 12a) ayant une orientation de fibres essentiellement tangentielle et d'autres couches (11b, 12b) ayant une orientation de fibres définissant avec celles-ci avec un angle ayant un ordre de grandeur de 45° ou 90°, les couches (11b, 12b) ayant une orientation de fibres angulaire étant formées par des segments d'arc préformés selon un procédé de thermoformage qui, lors de la pose des différentes couches sur un moule de préforme du dispositif de compression, sont appliquées conjointement.
